# EUROPEAN PATENT APPLICATION

(11) **EP 1 965 525 A2**
(43) Date of publication of application: **03.09.2008**
(21) Application number: 08003567.8
(22) Date of filing: 27.02.2008
(51) Int. Cl.: H04H 20/72

(54) **Electric field state determination method for digital multimedia broadcast and portable device using the same**

(30) Priority: 27.02.2007 KR 20070019489
(71) Applicant: Samsung Electronics Co., Ltd., Suwon-si Gyeonggi-do (KR)
(72) Inventor: Kwon, Seong Geun, Gyeonggi-do (KR); Lee, Jong Kerl, Gyeonggi-do (KR)
(74) Representative: Lang, Johannes

(57) **Abstract**

A method for accurately estimating the received signal strength of a broadcast system and a portable device that may receive broadcast signals using the received signal strength estimation method are provided. An electric field state determination method for digital multimedia broadcast includes determining a current electric field on the digital broadcast channel based on at least one of whether generation of a transport stream is detected, a result of a comparison between a current buffering rate of a buffer and a threshold buffering rate, and a variation of a number of RGB frames accumulated in a buffer.

## Description

### BACKGROUND OF THE INVENTION

### FIELD OF THE INVENTION

[0001] The present invention relates to a digital multimedia broadcast system and, in particular, to a method for accurately estimating the received signal strength of a broadcast system and a portable device that may receive broadcast signals using the received signal strength estimation method.

### DISCUSSION OF THE BACKGROUND

Typically, a mobile communication system provides various messaging services such as Short Message Service (SMS), Multimedia Message Service (MMS), Electronic mail (E-mail), and Motion Picture mail, in addition to the standard voice communication service. Some newer portable devices are also equipped with a Digital Multimedia Broadcasting (DMB) module.

With the advance of the digital broadcast and mobile communication technologies, DMB service is becoming accessible to users on the move via receivers in automobiles or handheld terminals. DMB is a digital radio transmission system for sending digitally processed multimedia data, including audio and video data, to fixed and mobile devices.

DMB is based on the Digital Audio Broadcasting (DAB) standard, which is modified to transmit digital audio, video, and other types of data such as weather, news, and location information. DMB is in the spotlight as the next generation in broadcasting formats since it provides crystal-clear video, CD quality of audio, and data.

There are two types of DMB: Terrestrial DMB (T-DMB) and Satellite DMB (S-DMB). T-DMB and S-DMB are roughly equal in terms of their mobile reception of multimedia broadcasts. The difference between them is that T-DMB works on networks built through terrestrial broadcast stations, while S-DMB utilizes networks built with satellites and Gap Fillers, which provide in-building coverage.

S-DMB incorporates a high power geostationary satellite for outdoor coverage integrated with a terrestrial repeater (low power gap-filler) network for indoor coverage in urban areas. In the S-DMB system, the satellite broadcasts the broadcast signals received from the DMB broadcast center such that terminals located in the outdoor coverage area receive the broadcast signals. Terminals located in places, such as a tunnel, indoors, or a shadow area, may receive the broadcast signal via the gap-fillers.

Unlike S-DMB, T-DMB utilizes terrestrial broadcast stations, such as base stations of a cellular communication system. The broadcast stations broadcast the broadcast signal, i.e. television and radio programs, using the terrestrial wave.

When the frequency environment is bad, the DMB terminal may not recover the received broadcast signal. That is, the DMB terminal is configured to stop decoding the broadcast signals when the signal loss is greater than a threshold and to display a message that alerts the user of the weak signal.

However, the conventional DMB terminal has a drawback in that the DMB terminal may determine that the broadcast signal from a new broadcast station is weak whenever the broadcast station changes because the terminal uses a fixed signal loss threshold. Therefore, a broadcast signal that is actually of good quality may not be decoded by the DMB terminal.

### SUMMARY OF THE INVENTION

The present invention provides an electric field state determination method for a digital multimedia broadcast system and a portable device using the electric field state determination method that are capable of accurately determining the electric field state, which may improve the broadcast display performance of the portable device.

Additional feature of the invention will be set forth in the description which follow, and in part will be apparent from the description, or may be learned by practice of the invention.

The present invention discloses an electric field state determination method for digital multimedia broadcast including receiving a broadcast signal and determining a current electric field state. The current electric field state is determined by performing at least one of estimating the current electric field state on the basis of a result of a comparison between a current bit error rate of a signal channel-decoded from the broadcast signal through a convolutional coding and a threshold bit error rate, estimating the current electric field state on the basis of whether the decoded signal is output in the form of a transport stream, estimating the current electric field state on the basis of a result of a comparison between a buffering rate of an element stream generated from the transport stream to a first threshold value, estimating the current electric field state on the basis of a result of a comparison between a buffering rate of frames generated from the element stream and a second threshold value, and estimating the current electric field state on the basis of variation of a number of buffered frames.

The present invention also discloses a portable device having a digital multimedia broadcast function. The portable device includes a radio frequency unit, a control unit, and a display unit. The radio frequency unit receives a broadcast signal and decodes the broadcast signal to a transport stream. The control unit converts the transport stream to an element stream, buffers the element stream within an element stream buffer, generates a frame by decoding the element stream, and buffers the frame within a frame buffer. The display unit displays the frame and determines a current electric field state. The current electric field state is determined on the basis of at least one of whether generation of the transport stream is detected, a buffering rate of the element stream in the element stream buffer, a buffering rate of the frame in the frame buffer, and variation of a number of frames in the frame buffer.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.
FIG. 1 is a block diagram showing a configuration of a portable device according to an exemplary embodiment of the present invention.
FIG. 2 is a conceptual view showing a frame transmission pattern of broadcast signals according to an exemplary embodiment of the present invention.
FIG. 3 is a conceptual view showing a frame transmission pattern of broadcast signal according to another exemplary embodiment of the present invention.
FIG. 4 is a block diagram showing a configuration of the control unit of FIG. 1.
FIG. 5 is a diagram showing a transmission format of a signal packet according to an exemplary embodiment of the present invention.
FIG. 6 is a conceptual view showing how frames are buffered in a frame buffer according to an exemplary embodiment of the present invention.
FIG. 7 is a flowchart showing an electric field estimation method for a digital multimedia broadcast receiver according to an exemplary embodiment of the present invention.
FIG. 8 is a flowchart showing an electric field estimation method for a digital multimedia broadcast receiver according to another exemplary embodiment of the present invention.
FIG. 9 is a flowchart showing an electric field estimation method for a digital multimedia broadcast receiver according to another exemplary embodiment of the present invention.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. Like reference numerals in the drawings denote like elements.

In the following, the received signal strength estimation method and system for a portable device is described with a digital multimedia broadcasting (DMB) service. However, the present invention is not limited thereto. For example, the received signal strength estimation method and system can be applied to various other digital broadcasting services, such as a digital video broadcasting handheld (DVB-H) service.

Although the received signal strength estimation method and system is described as being implemented with a portable device, it may be implemented with various fixed and mobile terminals equipped with DMB functions. For example, the terminal may be a dedicated DMB receiver, a Personal Digital Assistant (PDA), a Smartphone, a laptop computer, a Personal Computer (PC), a 3^{rd} generation (3G) terminal, a Code Division Multiple Access (CDMA) terminal, a Global System for mobile communication (GSM) terminal, a General Packet Radio Service (GPRS) terminal, a Wireless Local Area Network (WLAN) terminal, a Wireless Broadband (WiBro) Terminal, or a High Speed Downlink Packet Access (HSDPA) terminal.

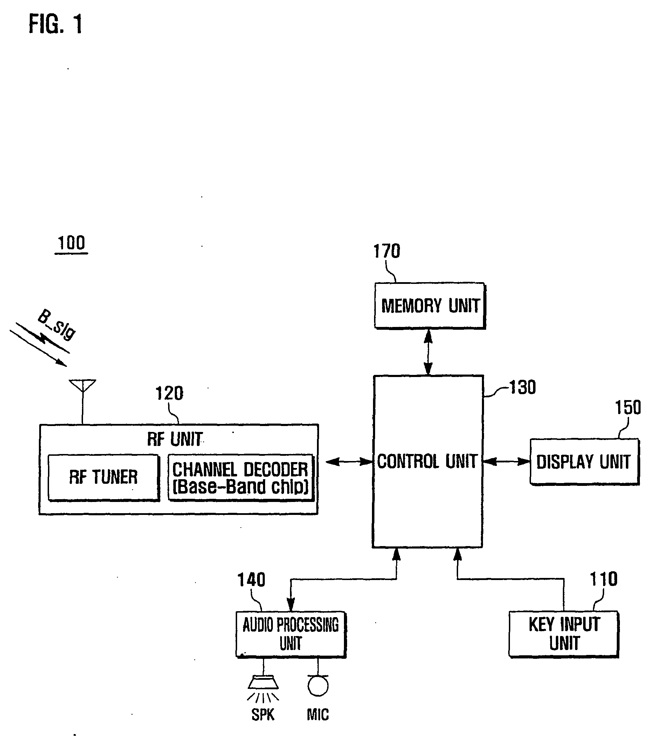

FIG. 1 is a block diagram showing a configuration of a portable device according to an exemplary embodiment of the present invention.

Referring to FIG. 1, the portable device 100 includes an audio processing unit 140, a memory unit 170, a key input unit 110, a display unit 150, a radio frequency (RF) unit 120, and a control unit 130.

The audio processing unit 140 processes an audio signal extracted from a received broadcast signal (B_sig) to output an audible sound through a speaker (SPK) and processes sound input through a microphone (MIC).

The memory unit 170 stores application programs associated with the operations of the portable device, downloaded multimedia contents, and user data generated while operating the application program. The memory unit 170 also buffers the broadcast signal (B_sig). The memory unit 170 may be provided with a program region and a data region.

The program region stores an operation system (OS) and application programs for processing and playing multimedia contents. The application programs may include a camera application program, a sound processing application, and still and motion picture play application programs. The control unit 130 executes the application programs to operate corresponding functions in response to user commands. Particularly, the program region stores a DMB application for processing a received broadcast signal (B_sig) and outputting the processed signal.

The data region stores data generated while the portable device 100 operates. The stored data may include multimedia contents, user data associated with optional functions, still and motion pictures captured by the camera module, phonebook data, audio data, and video data. The data region can be configured to selectively store the received broadcast signal (B_sig). That is, the portable device 100 can store part of the broadcast signal according to a capture command.

The key input unit 110 is provided with a plurality of alphanumeric keys for inputting numbers and letters and a plurality of function keys for executing functions corresponding to the function keys. The function keys include navigation keys, volume keys, and shortcut keys. The key input unit 110 generates a key sequence corresponding to a key input and transmits the key sequence to the control unit 130.

The key input unit 130 may be configured to generate a broadcast playback key sequence, a channel selection key sequence, a volume adjustment key sequence, and a recording sequence. Such key sequences are generated in response to corresponding key inputs and transmitted to the control unit 130.

The display unit 150 is configured to display menus associated with the operations of the portable device 100, user input information, and notification information. The display unit 150 may be implemented with a liquid crystal display (LCD), particularly with a touch screen function. In this case, the display unit 150 may act as an input unit.

Particularly, the display unit 150 displays DMB application menus of a program recovered from a broadcast signal (B_sig) received through a selected channel. The display unit 150 is configured to display a weak signal alert message and an image, such as the last successfully received video frame, when the received signal strength is weaker than a threshold strength.

The RF unit 120 is responsible for radio communication with other terminals and receives a broadcast signal (B_sig) transmitted by the broadcast station. The RF unit 120 includes an RF transmitter to up-convert and amplify a transmission signal and an RF receiver to low-noise amplify and down-convert a received signal. The RF unit 120 is connected to an antenna, and is provided with an RF tuner to tune the frequency to the selected channel and a channel decoder to decode the channel by controlling the RF tuner.

The control unit 130 controls general operations of the portable device 100 and signaling among the internal components of the portable device 100. The control unit 130 may be implemented with modem and codec functions.

Particularly, the control unit 130 may be configured to restrict broadcast display when a threshold signal loss of the broadcast signal (B_sig), for example, 20% signal loss, is reached. The signal loss per second is estimated and the control unit 130 stops displaying the program when the signal loss rate is equal to or greater than 20%. That is, the control unit 130 measures a number of frames per second (the maximum frame rate of DMB is currently 30 frames per second) and, if the number of frames is less than or equal to 24 (i.e., the signal loss is 20% or more), the control unit 130 stops the display of the program. The broadcast display restriction is a function to display an image, such as the last successfully decoded image, rather than the image decoded from the currently received broadcast signal (B_sig), when the signal loss rate is greater than or equal to the threshold signal loss.

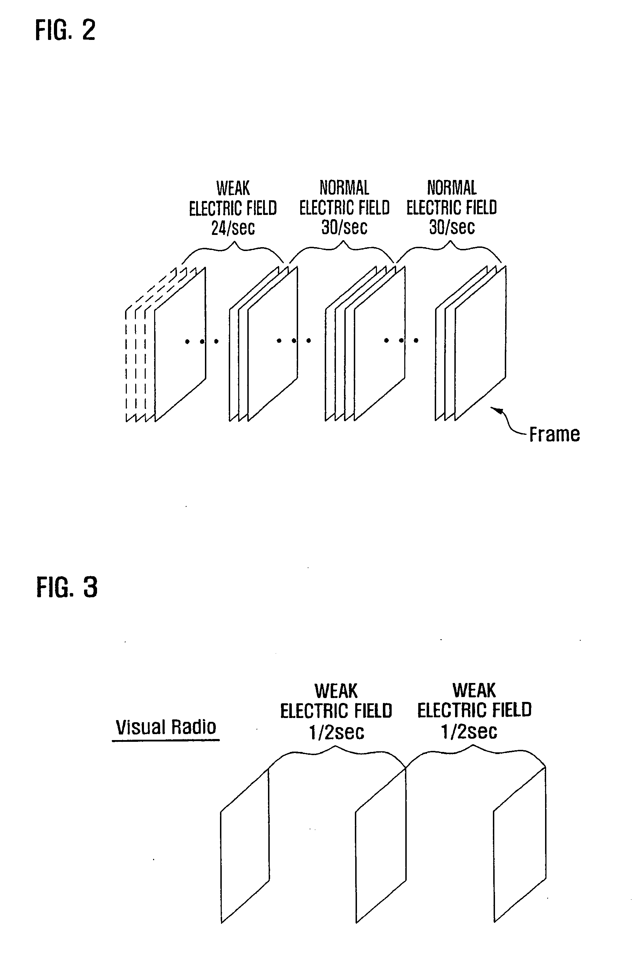

When the threshold signal loss is set to 20%, a broadcast signal received at below 24 frames per second is likely to be determined to be in the weak electric field state, whereas a broadcast signal received at 30 frames per second will be determined to be in a normal electric field state, as shown in FIG. 2. For example, a Visual Radio receiver receives one frame every 2 seconds, as shown in FIG. 3. In this case, the control unit 130 always determines that the signal loss exceeds 20%, and therefore fails to display the program.

In this exemplary embodiment, the control unit 130 measures the received signal strength on the basis of a received signal rate and buffering rate of the broadcast signal (B_sig) and the RGB frame conversion rate measured in the broadcast signal reception step, and then determines whether to display the program corresponding to the received broadcast signal (B_sig) according to the received signal strength.

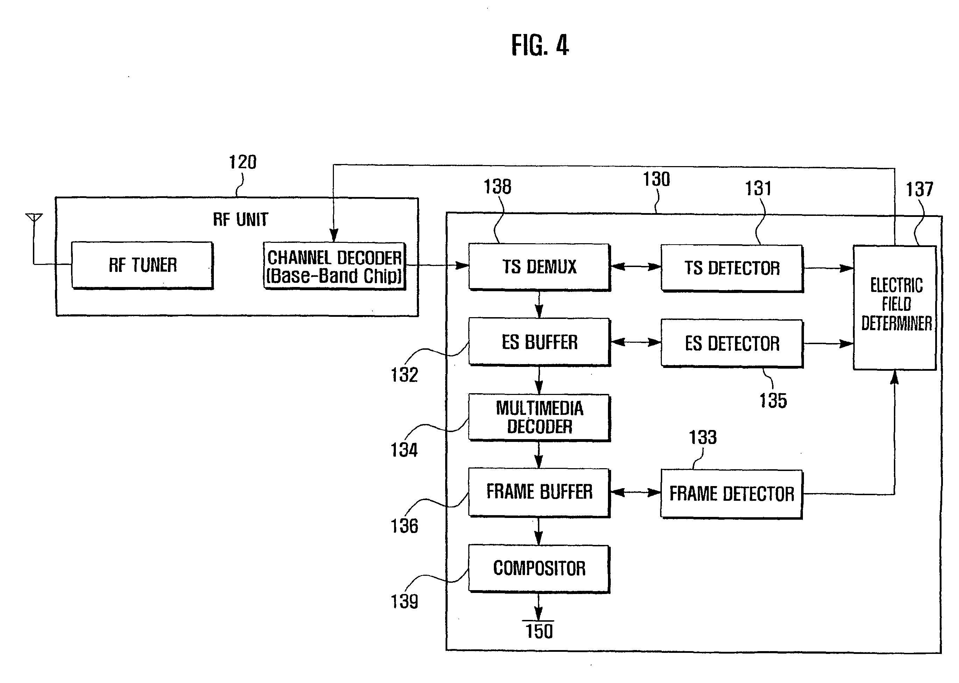

For this purpose, the control unit 130 is configured with the components as shown in FIG. 4.

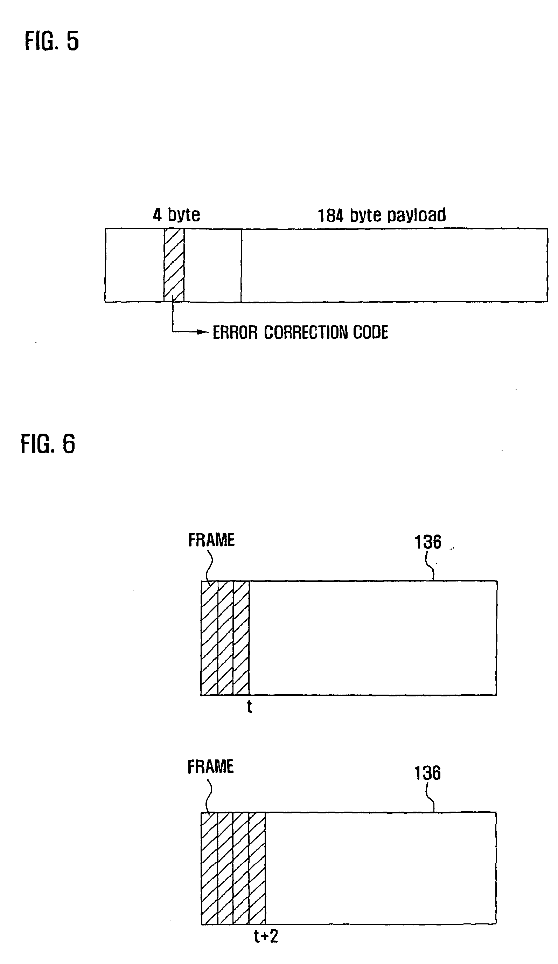

FIG. 4 is a block diagram showing a configuration of the control unit of FIG. 1. Referring to FIG. 4, the control unit 130 includes a Transport Stream Demultiplexer (TS Demux) 138, an Element Stream Buffer (ES Buffer) 132, a multimedia decoder 134, a frame buffer 136, a compositor 139, a Transport Stream (TS) detector 131, a frame detector 133, and an electric field determiner 137. The Ts Demux 138 demultiplexes the TS received from a channel decoder. That is, the TS Demux 138 extracts audio and video streams from a TS and transfers the audio and video streams to the ES Buffer 132. The ES Buffer 132 buffers the audio and video streams, converts the audio and video streams into an element stream, and outputs the element stream to the multimedia decoder 134. The multimedia decoder 134 decodes the element stream to frames and outputs the frames to the frame buffer 136. The frame buffer 136 buffers the frames and outputs the frames to the compositor 139. The compositor 139 composes an image by compositing the frames and outputs the image to the display unit 150. The TS is output by the RF unit 120. A baseband chip (i.e., a channel decoder) of the RF unit 120 demodulates the received broadcast signal (B_sig) to the TS using a specific demodulation scheme such as Orthogonal Frequency Division Multiplexing (OFDM) and Code Division Multiplexing (CDM). In the demodulation process, the channel decoder checks a header of a packet of the broadcast signal (B_sig) illustrated in FIG. 5, particularly an error bit, to determine whether the received broadcast signal (B_sig) is erroneous. If the broadcast signal is erroneous, the channel decoder removes the erroneous broadcast signal from the TS so the TS is composed of only the successfully received broadcast signals.

The electric field determiner 137 of the control unit 130 checks an error rate of the broadcast signals decoded by the channel decoder using a viterbi algorithm and determines whether the portable device is located in a weak signal area on the basis of the error rate. In more detail, the broadcast signal received by the RF tuner is output as the TS through the convolutional coding, Reed-Solomon coding, and interleaving processes. At this time, the electric field determiner 137 can check the Bit Error Rate (BER) of the signal through a convolutional coding process, such as the viterbi process. The electric field determiner 137 determines whether the BER is greater than a threshold value. If the BER is greater than the threshold value, the electric field determiner 137 determines that the portable device is in a weak signal area. When the portable device is located in an overlapping coverage area of a plurality of base stations, the received signal strength is high. However, the BER also increases because the base stations transmit different broadcast signals. In this case, the portable device may receive unplayable broadcast signals due to the high BER, which may result in the failed reception of a broadcast signal, even though the terminal is in a strong signal area. In this situation, the portable device regards the overlapping area as a weak signal area due to the BER of the broadcast signal (B_sig) decoded using the viterbi algorithm. Therefore, the control unit 130 disables the operation of the broadcast receiver module and maintains an idle mode to reduce battery power waste.

The TS detector 131 detects the TS transmitted from the channel decoder to the multimedia decoder 134. The TS detector 131 checks the TS output by the channel decoder and periodically (e.g., every second) transmits the check result to the electric field determiner 137.

The ES detector 135 periodically (e.g., every 1 or 2 seconds) checks the amount of the element stream that is buffered in the ES Buffer 132 and transmits the result to the electric field determiner 137.

The frame detector 133 checks how many RGB frames of the video data are buffered in the frame buffer 136 or the storage rate of the frame buffer 136 and transmits the result to the electric field determiner 137.

The electric field determiner 137 determines the electric field using the TS, the ES storage rate of the ES Buffer 132, and the number/rate of frames buffered in the frame buffer 136.

In more detail, the electric field determiner 137 determines the electric field on the basis of the TS flow output from the TS detector 131. That is, the electric field determiner 137 determines the electric field according to whether the TS is detected during a set period. In other words, the electric field determiner 137 determines the electric field on the basis of whether the TS is periodically detected from a time point when a TS occurs. If the TS is detected periodically, the electric field determiner 137 determines that the portable device is located in a normal signal area, and otherwise, the electric field determiner 137 determines that the portable device is in a weak signal area. When no TS is detected, the electric field determiner 137 waits a set time. If no TS is detected in the set time, the electric field determiner 137 performs broadcast display restriction. For this purpose, the electric field determiner 137 starts a timer at the time point when no TS is detected. If a TS is detected while the timer is running, the timer is initialized.

The electric field determiner 137 may determine the electric field state using the storage amount of the ES in the ES Buffer 132. That is, the electric field determiner 137 compares a reference storage amount that is obtained in a normal electric field and to the current storage amount of the ES Buffer 132 to determine whether the portable device is in a weak signal area. If the current storage amount is greater than the reference storage amount, the electric field determiner 137 determines that electric field state is normal and starts a timer. If the normal state is maintained until the timer expires, the electric field determiner 137 initializes the timer. If the current storage amount becomes less than the reference storage amount before the timer expires, the electric field determiner 137 activates the broadcast display restriction function.

The electric field determiner 137 may be configured to determine the electric field state using the storage amount of the frame buffer 136. That is, the electric field determiner 137 compares the current amount of frames buffered in the frame buffer 136 to a reference amount of frames or compares the current storage rate of the frame buffer 136 to a reference storage rate of the frame buffer 136 and determines the electric field state on the basis of the comparison result. Storage rate-based electric field state determination is performed in a similar manner to electric field state determination using the ES detector 135 and thus a detailed description of the operation of the storage rate-based electric field state determination is omitted. In the case of frame amount-based electric field state determination, the electric field determiner 137 may determine the electric field state using an accumulated amount of the frames.

FIG. 6 is a diagram showing a data format of a broadcast signal according to an exemplary embodiment of the present invention. In FIG. 6, it is assumed that a frame is received every 2 cyclic periods. The electric field determiner 137 checks a number of the frames accumulated in the frame buffer 136 every 2 cyclic periods (t and t+2), subtracts the number of the frames at t from the number of the frames (d) at t+2, and determines whether the result is 1 or 0. The frame detector 133 checks the frame buffer 136 every second. If the calculation result alternates between 1 and 0, the electric field determiner 137 regards the electric field state as in a normal state. Only when a result of 0 is repeated does the electric field determiner 137 determine that the electric field is in a weak state. If it is determined that the current electric field is in a weak state, the electric field determiner 137 activates the broadcast display restriction function using the timer described above with the TS detector 131 and the ES detector 135.

If the broadcast display restriction function is activated, the control unit 130 stops the operation of the DMB application to reduce battery power waste and periodically scans the electric field. If it is detected that the electric field is in a normal state, the control unit 130 executes the DMB application to display the program corresponding to the broadcast signal (B_sig).

The control unit 130 can recognize the current electric field state on the basis of the determination result of the electric field determiner 137. The determination result includes at least one of an ES-based determination result and a frame-based determination result. The control unit 130 may determine the current electric field state using the determination results of the electric field determiner 137 individually or compositely and controls the broadcast display restriction function based thereon.

For example, the control unit 130 may control the broadcast display restriction function in a stepwise manner such that the BER-based determination result, TS-based determination result, ES-based determination result, and frame-based determination result are applied in order to determine the current electric field state. When the BER of the received broadcast signal (B_sig) is greater than a threshold value, the control unit 130 deactivates the broadcast receiver module and displays an image, such as the last successfully received video frame. If the TS-based-determination result indicates a weak electric field, the control unit performs the ES-based electric field determination process. Next, if the ES-based determination result indicates a weak electric field state, the control unit 130 performs the frame-based electric field determination process. Finally, if the frame-based determination result indicates a weak electric field state, the control unit 130 activates the broadcast display restriction function.

As noted above, the control unit 130 controls such that the parameters, i.e., the different electric field determination results, are applied in stepwise manner. As an alternative to that noted above, the control unit 130 may first check the frame-based electric field determination result. If the frame-based electric field determination result indicates a weak electric field, the control unit 130 performs the ES-based electric field determination process. If the ES-based electric field determination result indicates a weak electric field, the control unit 130 performs the TS-based electric field determination process. If the TS-based electric field determination result indicates a weak electric field, the control unit 130 performs the BER-based electric field determination result and finally determines whether the current electric field is in a weak state.

Although the control unit 130 is configured to perform all the above described processes, the present invention is not limited thereto. For example, the control unit 130 may be configured to determine the state of the electric field through all of the steps of sub-determining the electric field state on the basis of BER, TS flow, ES flow, and frame flow, or through at least one of these factors.

In this manner, the control unit 130 may accurately determine the state of the electric field in the current location of the portable device, reduce battery power waste, and efficiently adjust processing load.

Until now, the structures and functions of the elements of the portable device according to an exemplary embodiment of the present invention have been described in association with electric field state determination based on the broadcast signal. Now, an electric field estimation method for estimating the electric field state based on a digital multimedia broadcast channel, and operations of the portable device using the electric field estimation method are described hereinafter in more detail.

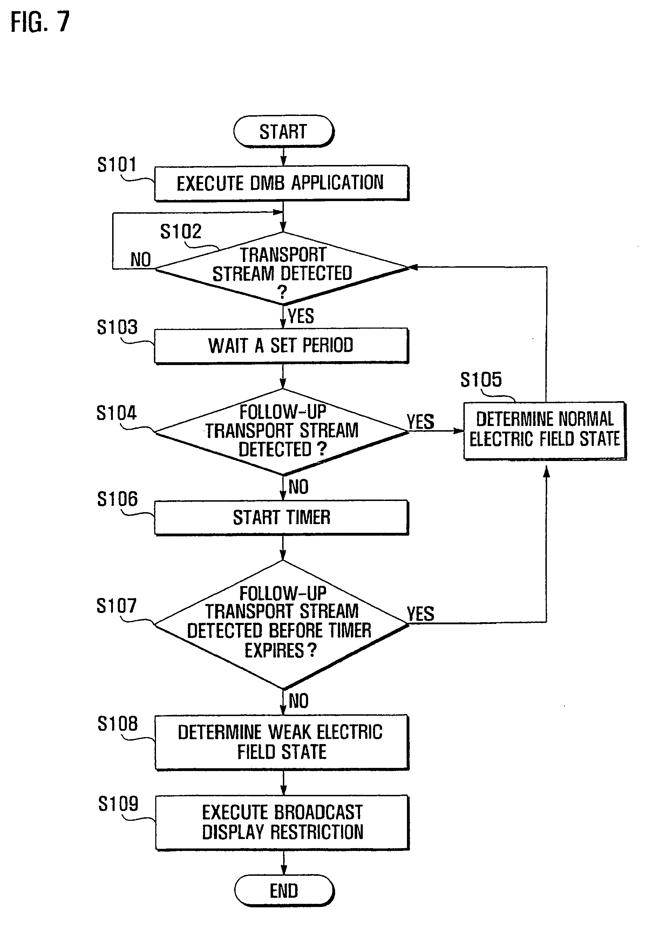

FIG. 7 is a flowchart showing an electric field estimation method for a DMB receiver according to an exemplary embodiment of the present invention.

Referring to FIG. 7, in the electric field estimation method of an exemplary embodiment of the present invention, the control unit 130 activates a DMB application in response to a user key input (S101). That is, if a key sequence generated in response to a menu or hot key selection for playing a DMB channel is input, the control unit 130 loads and activates the DMB application stored within the memory unit 170. The RF unit 120 is configured to receive a broadcast signal (B_sig), decode the received broadcast signal (B_sig), convert the decoded broadcast signal (B_sig) to a TS, and transmit the TS to the control unit 130.

In accordance with an exemplary embodiment, the electric field estimation method includes determining an electric field on the basis of the BER of the broadcast signal decoded through a convolutional coding process according to the viterbi algorithm. That is, the electric field estimation method determines the electric field state is a weak electric field state when the BER of the broadcast signal decoded through a viterbi decoding process is greater than a threshold value.

Next, the control unit 130 determines whether a TS is output from the RF unit 120 (S102). At step S102, the control unit 130 controls the TS detector 131 to check a signal line connected to the RF unit 120 and determine whether the TS is output through the signal line.

If a TS is detected on the signal line, the control unit 130 waits for a set time period (S103) and then determines if a new TS is detected on the signal line (S104). The set time period may be one second to a few seconds.

If a new TS is detected on the signal line, the control unit 130 determines that the current electric field is in a normal state (S105). Otherwise, the control unit 130 starts a counter to count to a set time and starts, if the counter has expired without the occurrence of a specific interruption, a timer that is set for a set time period (S106). The specific interruption may be the detection of a new TS. The set time period may correspond to a set number of cycles. For example, when the cycle time is 1 second, the timer may set to 2 minutes and 30 seconds.

After starting the timer, the control unit 130 determines whether a new TS is detected before the timer expires (S107). If a new TS is detected before the timer expires, the control unit 130 determines that the current electric field is in a normal state (S105). At step S107, the control unit 130 periodically checks whether a new TS is detected until the timer expires.

On the other hand, if a new TS is not detected before the timer expires, the control unit 130 determines that the current electric field on the broadcast channel is in a weak state (S108) and executes the broadcast display restriction function (S109).

If the broadcast display restriction function is activated, the display unit 150 displays a weak signal area alert message with an image, such as the last successfully recovered image. While the broadcast display restriction function is activated, the control unit 130 disables the DMB application to reduce battery power waste and periodically scans the broadcast channel. If the weak electric field state changes to a normal electric field state, the control unit 130 enables the DMB application to process the received broadcast signal (B_sig) to be output through the display unit 150.

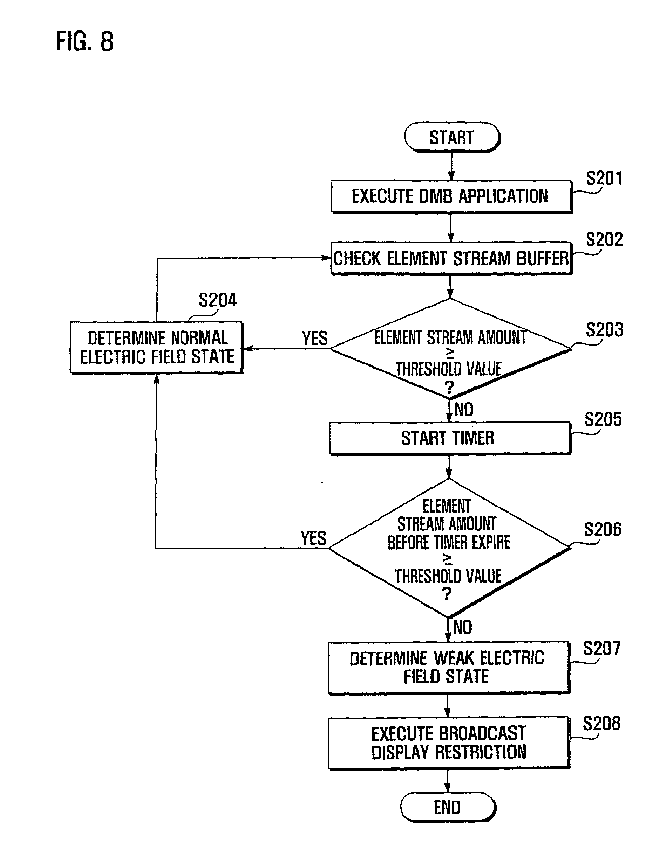

FIG. 8 is a flowchart showing an electric field estimation method for a digital multimedia broadcast receiver according to another exemplary embodiment of the present invention.

Referring to FIG. 8, the control unit 130 first executes a DMB application in response to a key input for playing a broadcast (S201).

Once the DMB application is activated, the control unit 130 controls the ES detector 135 to check the ES Buffer 132 (S202). Next, the control unit 130 compares a current ES amount buffered in the ES Buffer 132 to a threshold value and determines whether the current ES amount is greater than or equal to the threshold value (S203). Here, the control unit 130 may set the threshold value to the ES amount that is buffered within the ES Buffer 132 in a normal electric field state.

If the current ES amount is greater than or equal to the threshold value, the control unit 130 determines that the current electric field state is normal (S204) and repeats step S202. On the other hand, if the current ES amount is less than the threshold value, the control unit 130 starts a timer (S205). Next, the control unit 130 determines whether the ES amount becomes greater than or equal to the threshold value before the timer expires (S206).

If the ES amount does not become greater than or equal to the threshold value before the timer expires, the control unit 130 determines that the current electric field is in a weak state (S207) and executes the broadcast display restriction function (S208).

If the ES amount becomes greater than or equal to the threshold value before the timer expires, the control unit 130 determines that the current electric field is in a normal state (S204) and repeats step S202. Once it is determined that the current electric field state is normal, the control unit 130 processes the received broadcast signal and displays it on the display unit 150.

As described above, the broadcast display restriction function displays a weak signal area alert message together with an image, such as the last successfully recovered image.

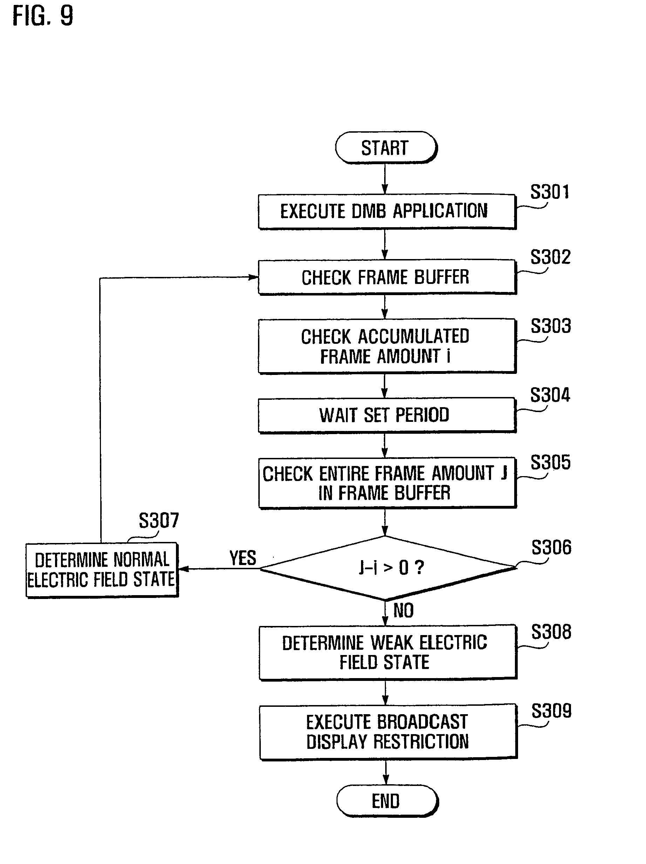

FIG. 9 is a flowchart showing an electric field estimation method for a digital multimedia broadcast receiver according to another exemplary embodiment of the present invention.

In this exemplary embodiment, an electric field estimation method using the frame buffer is described. However, a description of elements of the electric field estimation method based on the storage rate of the frame buffer is omitted because it is similar to the electric field estimation method shown in FIG. 8. In the following, an electric field estimation method based on the number of the frames buffered in the frame buffer is described.

In the electric field estimation method according to an exemplary embodiment of the present invention, the control unit 130 first executes a DMB application in response to a user's key input to play a broadcast (S301).

Next, the control unit 130 controls the multimedia decoder 134 to decode the ES, checks the frame buffer 136 buffering the video data RGB frames (S302), and calculates the number of the frames (i) buffered in the frame buffer 136 (S303). Sequentially, the control unit 130 waits a set period (S304) and then calculates the number of the frames (j) again (S305). The set period is a period in which a frame is updated in the frame buffer 136. The period may be set to a few seconds or a dozen seconds.

Next, the control unit 130 determines whether a value obtained by subtracting i from j is greater than 0 (S306). If the subtraction result value is greater than 0, the control unit 130 determines that the current electric field is in a normal state (S307) and repeats step S302. Similar to the electric field estimation methods shown in FIG. 7 and FIG. 8, the control unit 130 uses a timer to secure a time interval to measure the electric field state. That is, the control unit 130 repeatedly checks the number of the frames until the timer expires and determines whether the subtraction result (j-i) remains greater than 0. If the subtraction result value remains greater than 0, the control unit determines the current electric field is in a normal state. In the case of Visual Radio, the number of frames buffered in the frame buffer is checked every 2 seconds. In the other types of broadcast signals, the cycle for checking the number of frames may be determined in consideration of the characteristics of the corresponding broadcast system.

In the meantime, if the subtraction result value is less than or equal to 0, the control unit 130 determines that the current electric field is in a weak state (S308) and executes the broadcast display restriction function (S309). As described above, the broadcast display restriction function displays a weak signal area alert message together with an image, such as the last successfully recovered image.

As described above, the electric field estimation method and system for a DMB-enabled portable device of exemplary embodiments of the present invention determines the current electric field state on the basis of at least one of the TS generation, the storage rate of the ES Buffer, the storage rate of the frame buffer, and the number of the frames accumulated in the frame buffer. In this manner, the electric field estimation method and system may improve the accuracy of the electric field estimation and perform a more sophisticated broadcast display restriction function.

That is, the electric field estimation method and system for a portable device according to an exemplary embodiment of the present invention performs the electric field estimation using the BER of the decoded broadcast signals, TS generation, storage rate of the ES Buffer, storage rate of the frame buffer, and the number of the frames, individually or compositely.

For example, when electric field estimation is performed through plural steps, the portable device determines whether the BER of the broadcast signal decoded by a convolusional coding scheme is greater than a threshold value. If the BER is greater than the threshold value, the control unit determines that the current electric field is in a weak state. If the current electric field is determined to be in a weak state, the portable device does not immediately execute the broadcast display restriction function but rather, periodically checks whether a TS is generated. The control unit of the portable device determines whether the current electric field is in a weak state on the basis of whether the TS is generated. If it is determined that the current electric field is in a weak state, the control unit does not immediately execute the broadcast display restriction function but rather, checks the storage rate of the ES Buffer. Next, if it is determined that the current electric field is in a weak state on the basis of the storage rate of the ES Buffer, the control unit determines whether the current electric field is in a weak state using the number of frames buffered in the frame buffer. If it is determined that the current electric field is in a weak state using the number of frames, the control unit executes the broadcast display restriction function.

As described above, the electric field estimation method and system estimates the current electric field through a series of steps including comparing BER of the broadcast signal decoded by a convolutional coding scheme with a threshold value, determining the TS generation, comparing the storage rate of the ES Buffer with a threshold value, comparing the storage rate of the frame buffer with a threshold value, and comparing the number of the frames accumulated in the frame buffer with a threshold value, which may improve the reliability of the estimation result and reduce waste of battery power and processing load. In the stepwise estimation method, the frame-based electric field estimation may be the first step and the BER-based electric field estimation may be the last step in determining the final electric field state.

The portable device according to an exemplary embodiment of the present invention may determine the current electric field state by checking a threshold BER to the broadcast signal decoded by a convolutional coding scheme, and selectively performing at least one of determining the TS generation, comparing the storage rate of the ES Buffer with a threshold value, comparing the storage rate of the frame buffer with a threshold value, comparing the number of the frames buffered in the frame buffer with a threshold value. Also, the portable device according to an exemplary embodiment of the present invention may determine the current electric field state using only the BER of the broadcast signal decoded by a convolutional coding scheme. Also, the portable device according to an exemplary embodiment of the present invention may determine the current electric field state using the TS generation and the storage rate of the ES Buffer. Similarly, the portable device according to an exemplary embodiment of the present invention may determine the current electric field state using the storage rate of the ES Buffer and the storage rate of the frame buffer, the storage rate of the ES Buffer and the number of the frames accumulated in the frame buffer, the TS generation and storage rate of the frame buffer, or the TS generation and the number of the frames accumulated in the frame buffer.

As described above, the electric field estimation method and apparatus for a portable device for supporting digital multimedia broadcast service determines a state of the current electric field on a broadcast channel on the basis of various parameters and performs a broadcast display restriction function according to the state of the current electric field, which may improve the reliability of the electric field determination result.
It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

## Claims

1. An electric field state determination method for digital multimedia broadcast, comprising:
receiving a broadcast signal; and
determining a current electric field state by performing at least one of:
estimating the current electric field state on the basis of a result of a comparison between a current bit error rate of a signal channel-decoded from the broadcast signal through a convolutional coding and a threshold bit error rate,
estimating the current electric field state on the basis of whether the decoded signal is output in the form of a transport stream,
estimating the current electric field state on the basis of a result of a comparison between a buffering rate of an element stream generated from the transport stream to a first threshold value,
estimating the current electric field state on the basis of a result of a comparison between a buffering rate of frames generated from the element stream and a second threshold value, and
estimating the current electric field state on the basis of a variation of a number of buffered frames.

2. The method of claim 1, wherein estimating the current electric field state on the basis of whether the decoded signal is output in the form of a transport stream comprises:
determining whether a transport stream is derived from the decoded signal; determining whether a follow-up transport stream is derived in a set period; and
determining the current electric field state on the basis of whether the follow-up transport stream is received.

3. The method of claim 2, wherein estimating the current electric field state on the basis of whether the decoded signal is output in the form of a transport stream further comprises:
determining whether the decoded signal is erroneous; and
converting the decoded signal into the transport stream if the decoded signal is not erroneous.

4. The method of claim 2, wherein estimating the current electric field state on the basis of whether the decoded signal is output in the form of a transport stream further comprises:
starting a timer when the transport stream is detected;
determining whether the follow-up transport stream is detected before the timer expires; and
determining that the current electric field state is a weak electric field state if the follow-up transport stream is not detected before the timer expires.

5. The method of claim 4, wherein estimating the current electric field state on the basis of whether the decoded signal is output in the form of a transport stream further comprises executing a broadcast display restriction function if the current electric field state is the weak electric field state.

6. The method of claim 5, wherein executing a broadcast display restriction function comprises:
outputting a message announcing a weak signal area; and
displaying a last successfully received broadcast image.

7. The method of claim 4, further comprising determining the current electric field state is a normal electric field state if the follow-up transport stream is detected before the timer expires.

8. The method of claim 1, wherein estimating the current electric field state on the basis of a result of a comparison between a buffering rate of an element stream generated from the transport stream to a first threshold value comprises:
starting a timer if the buffering rate of the element stream is less than the first threshold value; and
determining the current electric field state is a weak electric field state if the buffering rate remains less than the threshold value until the timer expires.

9. The method of claim 8, wherein estimating the current electric field state on the basis of a result of a comparison between a buffering rate of an element stream generated from the transport stream to a first threshold value further comprises determining the current electric field state is a normal electric field state if the buffering rate becomes greater than or equal to the first threshold value before the timer expires.

10. The method of claim 8, wherein the first threshold value is the buffering rate of the element stream in a normal electric field state.

11. The method of claim 1, wherein estimating the current electric field state on the basis of a result of a comparison between a buffering rate of frames generated from the element stream and a second threshold value comprises:
starting a timer if the buffering rate of frames is less than the second threshold value; and
determining the current electric field state is a weak electric field state if the buffering rate of frames remains less than the second threshold value until the timer expires.

12. The method of claim 1, wherein estimating the current electric field state on the basis of a variation of a number of buffered frames comprises:
counting a number of frames buffered in a frame buffer at a first time;
counting the number of frames buffered in the frame buffer at a second time;
subtracting the number of frames counted at the first time from the number of frames counted at the second time; and
determining the current electric field state on the basis of the subtraction result.

13. The method of claim 12, wherein estimating the current electric field state on the basis of a variation of a number of buffered frames further comprises:
starting a timer if the subtraction result is 0; and
determining the current electric field state is a weak electric field state if the subtraction result remains 0 until the timer expires.

14. The method of claim 12, wherein estimating the current electric field state on the basis of variation of a number of buffered frames further comprises determining the current electric field state is a normal electric field state if the subtraction result becomes greater than 0 before the timer expires.

15. The method of claim 1, wherein determining a current electric field state comprises:
determining whether the current bit error rate of the decoded broadcast signal is greater than the threshold bit error rate;
determining whether the decoded signal is output as the transport stream if the current bit error rate is greater than the threshold bit error rate;
comparing the buffering rate of the element stream generated from the transport stream with the first threshold value if the decoded signal is not partially output as the transport stream;
subtracting the number of frames counted at a first time from the number of frames counted at a second time or comparing the buffering rates of the frame buffer at two different time points if the buffering rate of the element stream is less than the second threshold value; and
determining the current electric field state on the basis of the subtraction result and the comparison results.

16. The method of claim 15, further comprising executing a broadcast display restriction function if the current electric field state is a weak electric field state.

17. The method of claim 16, wherein executing a broadcast display restriction function comprises:
outputting a message announcing a weak signal area; and
displaying a predetermined image or a last successfully received broadcast image.

18. The method of claim 1, wherein determining a current electric field state comprises:
comparing a value obtained by subtracting an amount of frames buffered in a frame buffer at a first time from an amount of frames buffered in the frame buffer at a second time or comparing current buffering rate of the frame buffer with a threshold buffering rate;
comparing a current buffering rate in the element stream buffer with the threshold buffering rate if the subtraction result value is 0 or if the current buffering rate is less than the threshold buffering rate;
determining if the current buffering rate in the element stream buffer is less than a threshold buffering rate; and
determining whether a bit error rate of the signals decoded from the broadcast signal is greater than a threshold bit error rate if the transport stream is not detected.

19. The method of claim 18, further comprising executing a broadcast display restriction function if the current electric field is determined to be a weak electric field state.

20. The method of claim 19, wherein executing a broadcast display restriction function comprises:
outputting a message announcing a weak signal area; and
displaying a predetermined image or a last successfully received broadcast image.

21. A portable device having a digital multimedia broadcast function, comprising:
a radio frequency unit to receive a broadcast signal and decode the broadcast signal to a transport stream;
a control unit to convert the transport stream to an element stream, buffer the element stream within an element stream buffer, generate a frame by decoding the element stream, and buffer the frame within a frame buffer; and
a display unit to display the frame,
wherein the control unit determines a current electric field state on the basis of at least one of whether generation of the transport stream is detected, a buffering rate of the element stream in the element stream buffer, a buff ering rate of the frame in the frame buffer, and variation of a number of frames in the frame buffer.

22. The portable device of claim 21, wherein the control unit comprises:
at least one of a transport stream detector to detect generation of the transport stream, an element stream detector to detect a buffering rate of the element stream in the element stream buffer, and a frame detector to detect a buffering rate of the frame or a number of the frames in the frame buffer; and
an electric field determiner to determine the current electric field state on the basis of an output of the at least one of a transport stream detector, an element stream detector, and a frame detector.

23. The portable device of claim 22, wherein the electric field determiner starts a timer when no follow-up transport stream is detected, the buffering rate of the element stream is less than a threshold buffering rate, the buffering rate of the frame is less than a threshold buffering rate, or the number of frames accumulated in the frame buffer is not changed; and
the electric field determiner determines a current electric field state to be a weak electric field state if no follow-up transport stream is detected, the buffering rate of the element stream is less than a threshold buffering rate, the buffering rate of the frame is less than a threshold buffering rate, or the number of frames accumulated in the frame buffer is not changed, before the timer expires.

24. The portable device of claim 23, wherein the control unit stops displaying the frame on the display unit, outputs an alert message announcing a weak signal area, and displays a last successfully received broadcast image when the current electric field is in a weak electric field state.
